Europäisches Patentamt

European Patent Office

Office européen des brevets

(19)

(11) Veröffentlichungsnummer: **0 175 950**
**B1**

(12) **EUROPÄISCHE PATENTSCHRIFT**

(45) Veröffentlichungstag der Patentschrift:
20.07.88

(21) Anmeldenummer: **85110795.3**

(22) Anmeldetag: **28.08.85**

(51) Int. Cl.⁴: **G 01 P 3/48**

(54) **Verfahren zur Ermittlung der Drehzahl eines sich drehenden Gegenstandes.**

(30) Priorität: **07.09.84 DE 3432883**

(43) Veröffentlichungstag der Anmeldung:
**02.04.86 Patentblatt 86/14**

(45) Bekanntmachung des Hinweises auf die Patenterteilung:
**20.07.88 Patentblatt 88/29**

(84) Benannte Vertragsstaaten:
**DE FR GB IT**

(56) Entgegenhaltungen:
**EP-A-0 063 614**
**EP-A-0 080 639**
**EP-A-0 148 518**
**DE-A-2 228 985**
**DE-A-2 820 327**

(73) Patentinhaber: **ROBERT BOSCH GMBH, Postfach 50, D-7000 Stuttgart 1 (DE)**

(72) Erfinder: **Fromme, Georg, Dipl.- Ing., Am Bach 23, D-2105 Seevetal 2 (DE)**

(74) Vertreter: **Kammer, Arno, Dipl.- Ing., ROBERT BOSCH GmbH Zentralabteilung Patente Postfach 50, D-7000 Stuttgart 1 (DE)**

LIBER, STOCKHOLM 1988

EP 0 175 950 B1

**Beschreibung**

Die Erfindung betrifft ein Verfahren zur Ermittlung der Drehzahl eines sich drehenden Gegenstandes gemäß den Merkmalen des Oberbegriffs des Anspruches 1.

Ein solches Verfahren ist aus der DE-A-2 820 327 bekannt.

Impulsgeber zur Drehzahlmessung erzeugen ein Wechselsignal mit einer drehzahlproportionalen Frequenz. In Verbindung mit einem Zeitnormal kann daraus die Drehzahl als Mittelwert über das ausgewertete Zeitintervall berechnet werden (Zählverfahren, Periodendauermessung). Dazu werden im allgemeinen die positive und negative Flanke des Gebersignals ausgenutzt. Unter rauhen Einsatzbedingungen, wie z. B. im Kfz, finden ausschließlich induktive Geber Anwendung. Sie bestehen aus einem Geberrad und einem Sensor. Bei derzeitigen Drehzahlmeßsystemen für Anti-Blockier-Systeme ist das Geberrad als Zahnkranz mit einer symmetrischen Teilung ausgeführt, während der Sensor aus einer Spule mit einem Permanentmagneten besteht. Magnet, Spule und Geberrad bilden einen magnetischen Kreis, dessen magnetischer Widerstand bei Winkeländerungen des Rades durch den Übergang von Zahn auf Zahnlücke bzw. umgekehrt verändert wird. Die daraus resultierende Flußänderung induziert in der Spule eine der Änderunggsgeschwindigkeit proportionale Spannung, deren zeitlicher Verlauf bei rechteckförmiger Zahngestaltung annähernd sinusförmig ist. Die Amplitude der Sensorspannung ist sowohl von der Drehzahl des Geberrades als auch vom veränderlichen Abstand zwischen Rad und Sensor linear abhängig.

Bei den bekannten Meßverfahren für die Drehzahl werden die Nulldurchgänge des Verlaufs des Signals zur Drehzahlbestimmungausgenutzt. Insbesondere bei kleinen Drehzahlen ist dabei der zeitliche Abstand aufeinanderfolgender Änderungen im Signalverlauf unerwünscht groß.

Bei dem erfindungsgemäßen Verfahren mit den Merkmalen des Anspruches 1 ist demgegenüber die zeitliche Auflösung erhöht, was zu einer Verbesserung des dynamischen Verhaltens in einem die Signale verarbeitenden Regelkreis führt.

Ein solches Verfahren, allerdings ohne D/A-Wandlung, ist aus der EP-A-0 148 518, Prioritätsdatum: 22.12.83, Veröffentlichungsdatum: 17.07.85, bekannt.

Anhand der Zeichnung wird ein Ausführungsbeispiel der Erfindung näher erläutert.

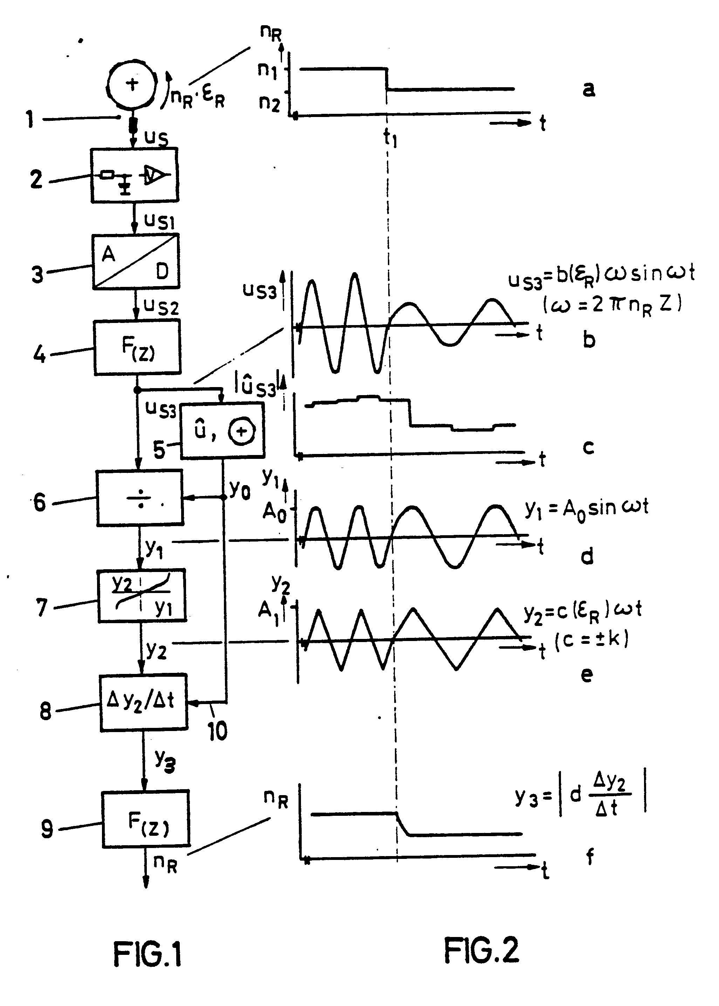

Die Zeichnung zeigt in Figur 1 ein Blockschaltbild zur Durchführung des erfindungsgemäßen Verfahrens und in Figur 2 den zugehörigen Signalverlauf an verschiedenen Stellen des Blockschaltbilds.

In Figur 1 ist mit 1 ein Meßwertgeber bezeichnet, der ein Signal

$$u_S(t) = b\,(\varepsilon_R) \cdot \omega \cdot \sin \omega\, t$$

mit $\omega = 2\pi\, n_R \cdot Z$ abgibt. Hierin bedeuten:

$b\,(\varepsilon_R)$: Faktor, der die Geberkonstante sowie die drehwinkelabhängigen Einflüsse (Seitenschlag des Geberrades) beinhaltet
$\varepsilon_R$: Raddrehwinkel
$n_R$: Raddrehzahl
$Z$: Zähnezahl des Geberrads.

Das Signal $u_S(t)$ wird in einem Filter 2 (Bandpaß) zur Unterdrückung von Störspannungen gefiltert. Die dabei entstehende Spannung $u_{S1}$ wird dann einem Analog-Digitalwandler 3 zugeführt. Der hierbei entstehende digitale Verlauf $u_{S2}$ gelangt zu einer Signalaufbereitung 4, in der über ein nichtrekursives Filter und ein Kochpaßfilter mit einer Eckfrequenz von $f < 0,1$ Hz ein Signal $u_{S3}$ erzeut wird. Dieses sinusförmige Signal ist in Figur 2b gezeigt und zwar unter der Annahme, daß wie in Figur 2a gezeigt - bei $t = t_1$ näherungsweise ein Drehzahlsprung stattfindet. In einem Block 5 werden die Extremwerte $\hat{u}_{S3}$ des Kurvenverlaufs der Figur 2b ($u_{S3}$) (sh. Figur 2c) gebildet, die zusammen mit dem Signal $u_{S3}$ dem Divisionsblock 6 zur Bildung eines Signals

$$y_1 = \frac{u_{S3}}{\hat{u}_{S3(m)}} \text{ oder } y_1' \cdot = \frac{u_{S3}}{\hat{u}_{S3(m)} \cdot b_1(m + 1)}$$

zugeführt werden. Es entsteht dann das Signal $y_1 = A_o \sin \omega t$. $y_1'$ berücksichtigt eine Kompensation von Geberfehlern durch den geberspezifischen Faktor $b_{1(\varepsilon_R)}$. m ist dabei die Numerierung der Extremwerte. Mit einem Extremwert $\hat{u}_{S3}(m)$ wird damit jeweils ein Faktor $b_1(m + 1)$ verarbeitet. Die Blöcke 5 und 6 bewirken eine Normierung des Signals $u_{S3}$. Das normierte Signal $y_1$ ist in Figur 2d dargestellt. Im Block 7 wird dann die Umkehrfunktion für das Signal $y_1$ ermittelt, d.h. das Signal

$$y_2 = \text{arc sin } (A_o \sin \omega t) = e\,(\varepsilon_R)\, \omega t.$$

Die Größe $c\,(\varepsilon_R) = \pm\, k$ beinhaltet dabei die Periodizität des Signals $y_2$. Es ist wie Figur 2e zeigt eine Dreiecksfunktion. Dieses Signals wird nun einem Differenzierer 8 zugeführt, der daraus ein Signal

$$y_3 = d\,\frac{\Delta y_2}{\Delta t}$$

erzeugt, das direkt der Drehzahl $n_R$ proportional ist. Dieses Signal wird in einem Block 9 nochmals gefiltert. Das Ausgangssignal $n_R$ zeigt Figur 2f. Die Verbindung 10 vom Block 5 zum Differenzierer 8 soll andeuten, daß der Differenzierer 8 - von den Extremwertperioden gesteuert - nur ca. 90 % der Signalamplitude von $y_2\,(t)$ ausnutzt. Für die restliche Zeit wird der Signalverlauf $u_{S3}$ direkt ausgenutzt. Die aufgezeigte Normierung kann bei drehzahlunabhängiger Signalamplitude des Gebers entfallen. Auch wenn das Sensorsignal stark von der Sinusform abweicht, ist unter bestimmten Voraussetzugen die Anwendung des Verfahrens möglich. Der Rechner ermittelt die nicht sinusförmige Abhängigkeit und berechnet die Umkehrfunktion dazu.

**Patentansprüche**

1. Verfahren zur Ermittlung der Drehzahl eines sich drehenden Gegenstands unter Verwendung eines Meßwertgebers, der ein erstes elektrisches Signal ($u_S$) abgibt, dessen Frequenz der Drehzahl Proportional ist und einer Auwerteschaltung (2-9), die aus diesem ersten Signal ($u_S$) ein zweites Sigal ($n_R$) erzeugt, das in seiner Größe der Drehzahl proportional ist, wobei das erste Signal ($u_S$) in ein Digitalsignal (in 3) umgewandelt wird, dadurch gekennzeichnet, daß das Digitalsignal durch Berechnung der Umkehrfunktion (in 7) in ein Signal mit dreieckförmigem Verlauf umgewandelt wird und daß der Betrag der Steigung der linearen Abschnitte der Dreiecksfunktion ermittelt wird (in 8), der ein Maß der Drehzahl ist.

2. Verfahren nach Anspruch 1, dadurch gekennzeichnet, daß eine analoge Filterung (in 2) vor der A/D-Wandlung (in 3) stattfindet.

3. Verfahren nach Anspruch 1 oder 2, dadurch gekennzeichnet, daß nach der A/D-Wandlung (in 3) ein selbsttätiger Offsetabgleich erfolgt (in 4).

4. Verfahren nach einem der Ansprüche 1 bis 3, dadurch gekennzeich net, daß nach der A/D-Wandlung eine digitale Filterung zur Beseitigung von Störeinflüssen erfolgt (in 4).

5. Verfahren nach einem der Ansprüche 1 bis 4 dadurch gekennzeichnet, daß das digitalisierte und dann gegebenenfalls gefilterte Signal normiert wird (in 6).

6. Verfahren nach Anspruch 5, dadurch gekennzeichnet, daß die Normierung durch Division des Signals durch seinen letzten Extremwert erfolgt.

7. Verfahren nach Anspruch 6, dadurch gekennzeichnet, daß Fertigungs- und Einbautoleranzen des Meßwertgebers bei der Normierung über einen abgespeicherten und fortlaufend nachgeführten differentiellen, drehzahlbezogenen Extremwertverlauf einer vollständigen Umdrehung des Geberrades eliminiert werden (in 5, 6).

8. Verfahren nach einem der Ansprüche 1 bis 7, dadurch gekennzeichnet, daß der Betrag der Steigung durch Differentiation ermittelt wird (in 8).

9. Verfahren nach Anspruch 8, dadurch gekennzeichnet, daß die Differentiation nur bis zu einem vorgegebenen Prozentsatz der Amplitude der Dreiecksfunktion erfolgt.

**Claims**

1. Method for determining the angular speed of a rotating object, using a measurement value transmitter which emits a first electrical signal ($u_S$), the frequency of which is proportional to the angular speed and an evaluating circuit (2-9) which generates from this first signal ($u_S$) a second signal ($n_R$), the magnitude of which is proportional to the angular speed, the first signal ($u_S$) being converted into a digital signal (in 3), characterized in that the digital signal is converted, by calculation of the inverse function (in 7), into a signal navigator angular variation and that the amount of the slope of the linear sections of the triangular function is determined (in 8) which is a measure of the angular speed.

2. Method according to Claim 1, characterized in that an analog filtering is effected (in 2) before the A/D conversion (in 3).

3. Method according to Claim 1 or 2, characterized in that automatic offset calibration is effected (in 4) after the A/D conversion (in 3).

4. Method according to one of Claims 1 to 3, characterized in that digital filtering is effected (in 4) for the elimination of interfering influences after the A/D conversion.

5. Method according to one of Claims 1 to 4, characterized in that the digitized and then possibly filtered signal is normalised (in 6).

6. Method according to Claim 5, characterized in that the normalization is effected by dividing the signal by its last extreme value.

7. Method according to Claim 6, characterized in that production and installation tolerances of the measurement value transmitter are eliminated (in 5, 6) during the normalization via a stored and continuously updated differential angular-speed-related extreme value variation of one complete revolution of the transmitter wheel.

8. Method according to one of Claims 1 to 7, characterized in that the amount of the slope is determined by differentiation (in 8).

9. Method according to Claim 8, characterized in that differentiation is effected only to a predetermined percentage of the amplitude of the triangular function.

**Revendications**

1. Procédé pour déterminer la vitesse de rotation d'un objet animé d'un mouvement de révolution, en utilisant un émetteur de valeurs de mesure qui délivre un premier signal électrique ($u_S$) dont la fréquence est proportionnelle à la vitesse de rotation et en utilisant un circuit d'exploitation (2-9) qui, à partir de ce premier signal ($u_S$), engendre un second signal ($n_R$) dont la grandeur est proportionnelle à la vitesse de rotation, le premier signal ($u_S$) étant converti (en 3) en un signal numérique, procédé caractérisé en ce que le signal numérique, par calcul (en 7) de la fonction inverse, est converti en un signal d'allure triangulaire et que l'on détermine (en 8) la valeur absolue de la pente des parties linéaires de la fonction triangulaire, cette valeur constituant une mesure de la vitesse de rotation.

2. Procédé selon la revendication 1 , caractérisé en ce qu'un filtrage analogique (en 2) a lieu avant la conversion analogique-numérique (en 3).

3. Procédé selon la revendication 1 ou 2, caractérisé en ce qu'après la conversion analogique-numérique (en 3) s'effectue (en 4) un alignement offset automatique.

4. Procédé selon une des revendications 1 à 3, caractérisé en ce qu'après la conversion analogique numérique, il s'effectue (en 4) un filtrage numérique pour éviter des influences parasites.

5. Procédé selon une des revendicationa 1 à 4, caractérisé en ce que le signal, mis sous forme numérique et ensuite éventuellement filtré, est normalisé (en 6).

6. Procédé selon la revendication 5, caractérisé en ce que la normalisation s'effectue en divisant le signal par sa dernière valeur extrême.

7. Procédé selon la revendication 6, caractérisé en ce que les tolérances de fabrication et de montage de l'émetteur de valeurs de mesure sont éliminées (en 5, 6) sur une révolution complète de la roue émettrice, lors de la normalisation, par l'intermédiaire d'une évolution différentielle de la valeur extrême, se rapportant à la vitesse de rotation et mémorisée et corrigée en continu.

8. Procédé selon une des revendications 1 à 7, caractérisé en ce que la valet absolue de la pente est obtenue (en 8) par différentiation.

9. Procédé selon la revendication 8, caractérisé en ce que la différentiation 8, effectue seulement jusqu'à un pourcentage prédéfini de l'amplitude de la fonction triangulaire.

FIG.1  FIG.2